# EUROPEAN PATENT SPECIFICATION

(11) **EP 3 792 158 B1**
(45) Date of publication and mention of the grant of the patent: **02.08.2023**
(21) Application number: 19207878.0
(22) Date of filing: 08.11.2019
(51) Int. Cl.: B62D 35/00

(54) **ROTARY ACTIVE SIDE AIR CURTAIN ASSEMBLY FOR A MOTOR VEHICLE**
DREHBARE AKTIVE SEITENLUFTVORHANGANORDNUNG FÜR EIN KRAFTFAHRZEUG
ENSEMBLE ROTATIF DE RIDEAU D'AIR À CÔTÉ ACTIF POUR VÉHICULE À MOTEUR

(30) Priority: 10.09.2019 CN 201910854139; 10.09.2019 CN 201921501170 U
(43) Date of publication of application: 17.03.2021
(73) Proprietor: Yanfeng Plastic Omnium Automotive Exterior Systems Co., Ltd., Shanghai 201805 (CN); Compagnie Plastic Omnium, 69007 Lyon (FR)
(72) Inventor: GUI, Xiaogang, SHANGHAI, 201805 (CN); XU, Jie, SHANGHAI, 201805 (CN); MAO, Fengwei, SHANGHAI, 201805 (CN); ZHANG, Chen, SHANGHAI, 201805 (CN)
(74) Representative: LLR

(56) References cited:
- DE-A1-102008 019 923
- DE-A1-102016 104 359
- GB-A- 2 528 927
- US-A1- 2016 016 617
- US-A1- 2017 361 879

## Description

### FIELD OF THE INVENTION

The present invention relates to automotive exteriors, and more particularly, to a rotary active side air curtain assembly.

### BACKGROUND OF THE INVENTION

Due to vehicle styling, in a running process of a vehicle, fog lamp cover areas of most vehicle models all belong to a high pressure area. Consequently, wind resistance of the entire vehicle is increased. To improve the wind pressure of such areas, an existing method is to optimize styling, that is, round the areas, and another method is to directly make a hole in a high pressure area. Obviously, the two methods both change the style of the entire vehicle, especially when it is in a parking state, the appearance being thus greatly affected.

### SUMMARY OF THE INVENTION

To avoid changing entire vehicle styling while improving wind pressure, the present invention provides a rotary active side air curtain assembly.

The present invention provides a rotary active side air curtain assembly for a motr vehicle, comprising a wind guide element, a rotating element, and a driving mechanism, wherein the rotating element comprises a rotating shaft and a blade that are fixed to one another, the blade being mounted on the wind guide element through the rotating shaft, and wherein the driving mechanism is connected to the rotating shaft and can drive the rotating shaft to rotate so as to drive the blade to rotate between an open position and a closed position. The wind guide element is provided with a top part and a base part that are opposite to each other, and the rotating shaft is pivotably mounted between the top part and the base part. The top part is provided with a mounting base in which the driving mechanism is mounted, and a top end of the rotating shaft pivotably runs through the top part and extends upward and is connected to the driving mechanism.

Preferably, the base part is mounted with a baseplate which is provided with a mounting hole, and a bottom end of the rotating shaft is inserted pivotably into the mounting hole.

Preferably, the baseplate is a wear-resistant plate.

Preferably, a middle part of the baseplate is provided with a screw through hole, and a screw runs through the screw through hole to fasten the baseplate to the base part.

Preferably, the driving mechanism is connected to a body control module or an electronic control unit of a vehicle.

Preferably, the driving mechanism is an electrical motor.

In the rotary active side air curtain assembly according to the present invention, opening of the blade is accurately controlled by the driving mechanism and the rotating shaft and wind pressure in an area of the rotary active side air curtain is improved through the opening and closing of the blade, thus wind resistance of the entire vehicle is improved and the perfection of the entire vehicle styling is ensured. In conclusion, the rotary active side air curtain assembly according to the present invention not only allows to improve aerodynamic performance of the entire vehicle and reduce fuel consumption, but also to reduce CO₂ emission.

The present invention further provides a motor vehicle comprising a rotary active side air curtain assembly as described above.

### BRIEF DESCRIPTION OF THE DRAWINGS

FIG. 1 is a schematic diagram of an overall structure of a rotary active side air curtain assembly according to a preferred embodiment of the present invention;
FIG. 2A is a schematic diagram of the rotary active side air curtain assembly of FIG. 1 in an open state;
FIG. 2B is a schematic diagram of the rotary active side air curtain assembly of FIG. 1 in a closed state;
FIG. 3 is a schematic diagram showing the mounting of a baseplate of the rotary active side air curtain assembly of FIG. 1;
FIG. 4 is a schematic diagram showing the mounting of a rotating element of the rotary active side air curtain assembly of FIG. 1; and
FIG. 5 is a schematic diagram showing the mounting of a driving mechanism of the rotary active side air curtain assembly of FIG. 1.

### DETAILED DESCRIPTION OF THE EMBODIMENTS

The following provides preferred embodiments of the present invention with reference to the accompanying drawings and provides detailed descriptions.

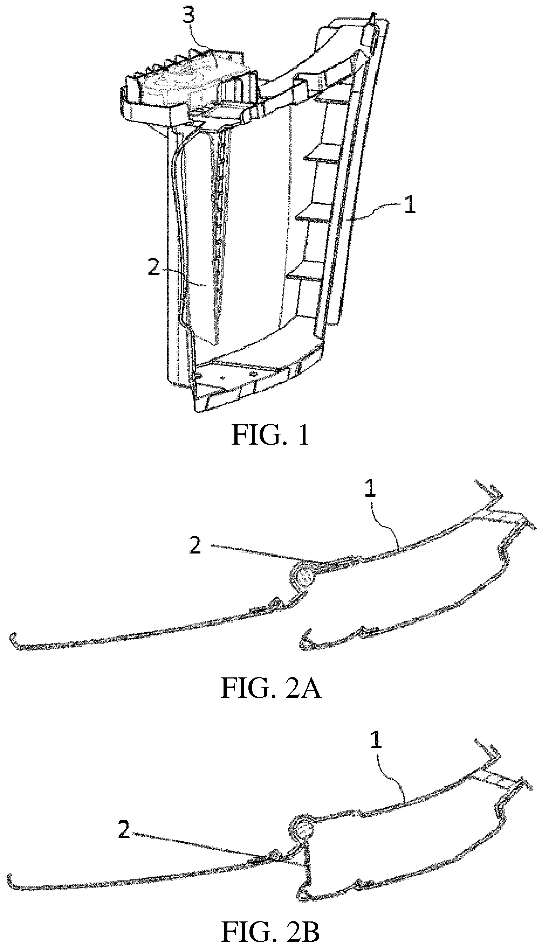

As shown in FIG. 1, a rotary active side air curtain assembly according to a preferred embodiment of the present invention includes a wind guide element 1, a rotating element 2, and a driving mechanism 3. The rotating element 2 is mounted on the wind guide element 1. The driving mechanism 3 is connected to the rotating element 2 to drive the rotating element 2 to rotate between an open position and a closed position. In an open state shown in FIG. 2A, the rotating element 2 is opened to reduce wind pressure in this area and reduce wind resistance, which corresponds to a vehicle high-speed running state. In a closed state shown in FIG. 2B, the rotating element 2 is closed to keep original styling, which corresponds to a vehicle a low-speed state or a vehicle parking state.

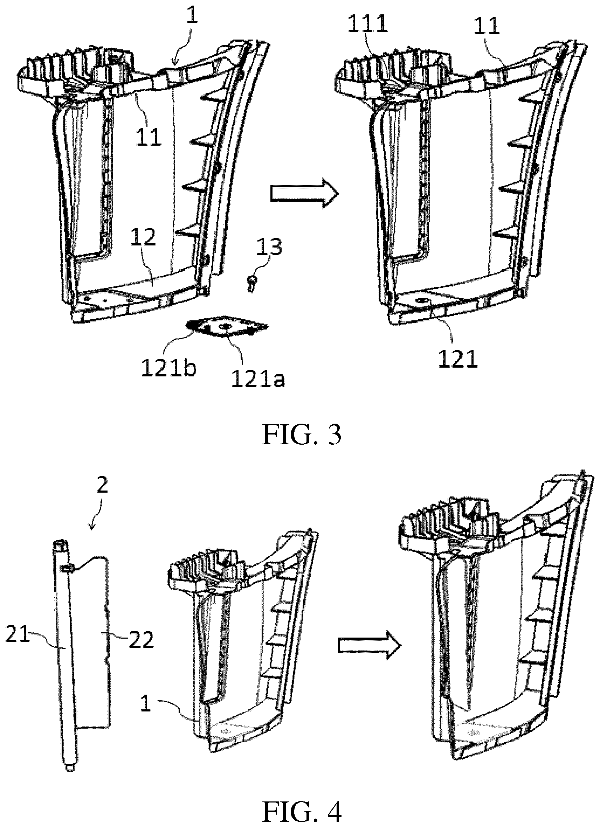

As shown in FIG. 3, the wind guide element 1 includes a top part 11 and a base part 12 that are fixedly connected and opposite to each other. A structure of the wind guide element 1 is similar to that of a wind guide element in the prior art and thus is not described herein. It is different from the prior art in that a mounting base 111 is formed on the top part 11, and a baseplate 121 is mounted on a top surface of the base part 12. Specifically, a middle part of the baseplate 121 is provided with a screw through hole 121a, and a screw 13 runs through the screw through hole 121a to fasten the baseplate 121 to the base part 12. In addition, a corner of the baseplate 121 is provided with a mounting hole 121b. It should be understood that, the baseplate 121 is a wear-resistant plate.

As shown in FIG. 4, the rotating element 2 is disposed between the top part 11 and the base part 12 of the wind guide element 1. Specifically, the rotating element 2 includes a rotating shaft 21. A top end of the rotating shaft 21 pivotably runs through the top part 11 and extends upward. A bottom end of the rotating shaft 21 is inserted into the mounting hole 121b of the baseplate 121 (refer to FIG. 3) to pivot. The rotating element 2 further includes a blade 22 connected to the rotating shaft 21 and the blade 22 is driven to rotate by rotation of the rotating shaft 21. As shown in FIG. 2A, when the rotating shaft 21 is rotated to drive the blade 22 to rotate to the open position, the blade 22 does not cover an air outlet, the wind pressure in this area is thus reduced. It should be understood that, the extent to which the air outlet is opened (i.e. the extent to which the blade 22 covers the air outlet) may be adjusted according to the driving speed of the vehicle. As shown in FIG. 2B, when the rotating shaft 21 is rotated to drive the blade 22 to rotate to the closed position, the blade 22 covers the air outlet completely, the original styling of the vehicle is thus restored and the appearance of the vehicle in low-speed or parking state is improved. It should be understood that, a specific shape of the blade 22 is not limited, and may be designed according to different shapes of the air outlet.

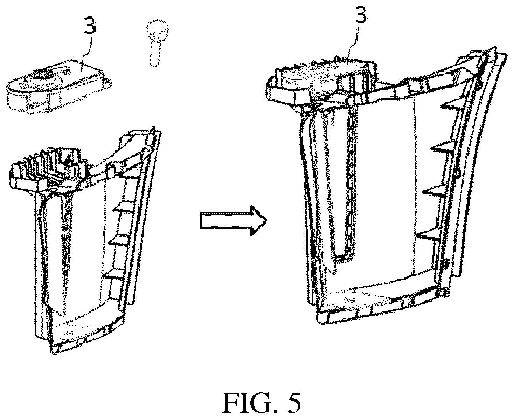

As shown in FIG. 5, the driving mechanism 3 is an electrical motor which is mounted in the mounting base 111 of the top part 11 of the wind guide element 1 and is connected to the top end of the rotating shaft 21 to drive the rotating shaft 21 to rotate.

In addition, the driving mechanism is connected to a body control module (BCM) or an electronic control unit (ECU) of a vehicle. In this way, the BCM or ECU may send an instruction according to a speed of the entire vehicle to accurately control the opening of the blade 22 through the driving mechanism 3 and the rotating shaft 21. Wind pressure in an area of the rotary active side air curtain is improved through the opening and closing of the blade 22, thus wind resistance of the entire vehicle is improved and the perfection of the entire vehicle styling is ensured.

## Claims

1. A rotary active side air curtain assembly for a motor vehicle, comprising a wind guide element (1), a rotating element (2), and a driving mechanism (3), **characterized in that** the rotating element (2) comprises a rotating shaft (21) and a blade (22) that are fixed to one another, the blade (22) being mounted on the wind guide element (1) through the rotating shaft (21), **in that** the driving mechanism (3) is connected to the rotating shaft and can drive the rotating shaft to rotate so as to drive the blade (22) to rotate between an open position and a closed position, **characterised in that** the wind guide element (1) is provided with a top part (11) and a base part (12) that are opposite to each other, and the rotating shaft (21) is pivotably mounted between the top part (11) and the base part (12), and **in that** the top part (11) is provided with a mounting base (111) in which the driving mechanism (3) is mounted, and a top end of the rotating shaft (21) pivotably runs through the top part (11) and extends upward and is connected to the driving mechanism (3).

2. The rotary active side air curtain assembly for a motor vehicle according to claim 1, wherein the base part (12) is mounted with a baseplate (121) which is provided with a mounting hole (121b), and a bottom end of the rotating shaft (21) is pivotably inserted into the mounting hole (121b) .

3. The rotary active side air curtain assembly for a motor vehicle according to claim 2, wherein the baseplate (121) is a wear-resistant plate.

4. The rotary active side air curtain assembly for a motor vehicle according to claim 2 or 3, wherein a middle part of the baseplate (121) is provided with a screw through hole (121a), and a screw (13) runs through the screw through hole (121a) to fasten the baseplate (121) to the base part (12).

5. The rotary active side air curtain assembly for a motor vehicle according to anyone of preceding claims, wherein the driving mechanism (3) is connected to a body control module or an electronic control unit of a vehicle.

6. The rotary active side air curtain assembly for a motor vehicle according to anyone of preceding claims, wherein the driving mechanism (3) is an electrical motor.

7. A motor vehicle comprising a rotary active side air curtain assembly according to anyone of preceding claims.

## Patentansprüche

1. Drehbare aktive Seitenluftvorhanganordnung für ein Kraftfahrzeug, die ein Windleitelement (1), ein Drehelement (2) und einen Antriebsmechanismus (3) aufweist, **dadurch gekennzeichnet, dass** das Drehelement (2) eine Drehwelle (21) und ein Blatt (22) aufweist, die aneinander befestigt sind, das Blatt (22) über die Drehwelle (21) an dem Windleitelement (1) angebracht ist, dass der Antriebsmechanismus (3) mit der Drehwelle verbunden ist und die Drehwelle zur Drehung antreiben kann, um das Blatt (22) zur Drehung zwischen einer offenen Position und einer geschlossenen Position anzutreiben, **dadurch gekennzeichnet, dass** das Windleitelement (1) mit einem oberen Teil (11) und einem Basisteil (12) versehen ist, die einander gegenüberliegen, und die Drehwelle (21) schwenkbar zwischen dem oberen Teil (11) und dem Basisteil (12) angebracht ist, und dass das obere Teil (11) mit einer Montagebasis (111) versehen ist, in der der Antriebsmechanismus (3) angebracht ist, und ein oberes Ende der Drehwelle (21) schwenkbar durch das oberen Teil (11) verläuft und sich nach oben erstreckt und mit dem Antriebsmechanismus (3) verbunden ist.

2. Drehbare aktive Seitenluftvorhanganordnung für ein Kraftfahrzeug nach Anspruch 1, wobei das Basisteil (12) mit einer Grundplatte (121) montiert ist, die mit einem Montageloch (121b) versehen ist, und ein unteres Ende der Drehwelle (21) schwenkbar in das Montageloch (121b) eingesetzt ist.

3. Drehbare aktive Seitenluftvorhanganordnung für ein Kraftfahrzeug nach Anspruch 2, wobei die Grundplatte (121) eine verschleißfeste Platte ist.

4. Drehbare aktive Seitenluftvorhanganordnung für ein Kraftfahrzeug nach Anspruch 2 oder 3, wobei ein mittlerer Teil der Grundplatte (121) mit einem Schraubendurchgangsloch (121a) versehen ist und eine Schraube (13) durch das Schraubendurchgangsloch (121a) verläuft, um die Grundplatte (121) an dem Basisteil (12) zu befestigen.

5. Drehbare aktive Seitenluftvorhanganordnung für ein Kraftfahrzeug nach einem der vorhergehenden Ansprüche, wobei der Antriebsmechanismus (3) mit einem Karosseriesteuermodul oder einer elektronischen Steuereinheit eines Fahrzeugs verbunden ist.

6. Drehbare aktive Seitenluftvorhanganordnung für ein Kraftfahrzeug nach einem der vorhergehenden Ansprüche, wobei der Antriebsmechanismus (3) ein Elektromotor ist.

7. Kraftfahrzeug mit einer drehbaren aktiven Seitenluftvorhanganordnung nach einem der vorhergehenden Ansprüche.

## Revendications

1. Ensemble de rideau d'air latéral actif rotatif pour véhicule automobile, comprenant un élément de guidage du vent (1), un élément rotatif (2) et un mécanisme d'entraînement (3), **caractérisé en ce que** l'élément rotatif (2) comprend un arbre rotatif (21) et une lame (22) fixés l'un à l'autre, la lame (22) étant montée sur l'élément de guidage du vent (1) par l'intermédiaire de l'arbre rotatif (21), **en ce que** le mécanisme d'entraînement (3) est relié à l'arbre rotatif et peut entraîner la rotation de l'arbre rotatif de manière à entraîner la rotation de la lame (22) entre une position ouverte et une position fermée, **caractérisé en ce que** l'élément de guidage du vent (1) comprend une partie supérieure (11) et une partie de base (12) opposées l'une à l'autre, et que l'arbre rotatif (21) est monté pivotable entre la partie supérieure (11) et la partie de base (12), et **en ce que** la partie supérieure (11) est munie d'une base de montage (111) dans laquelle le mécanisme d'entraînement (3) est monté, et une extrémité supérieure de l'arbre rotatif (21) traverse de manière pivotable la partie supérieure (11) et s'étend vers le haut et est reliée au mécanisme d'entraînement (3).

2. Ensemble de rideau d'air latéral actif rotatif pour véhicule automobile selon la revendication 1, dans lequel la partie de base (12) est montée avec une plaque de base (121) qui est munie d'un trou de montage (121b), et une extrémité inférieure de l'arbre rotatif (21) est inséré pivotable dans le trou de montage (121b) .

3. Ensemble de rideau d'air latéral actif rotatif pour véhicule automobile selon la revendication 2, dans lequel la plaque de base (121) est une plaque résistante à l'usure.

4. Ensemble de rideau d'air latéral actif rotatif pour véhicule automobile selon la revendication 2 ou 3, dans lequel une partie centrale de la plaque de base (121) est munie d'un trou traversant pour vis (121a), et une vis (13) traverse le trou traversant pour vis (121a) pour fixer la plaque de base (121 ) à la partie de base (12).

5. Ensemble de rideau d'air latéral actif rotatif pour véhicule automobile selon l'une quelconque des revendications précédentes, dans lequel le mécanisme d'entraînement (3) est relié à un module de commande de carrosserie ou à une unité de commande électronique d'un véhicule.

6. Ensemble de rideau d'air latéral actif rotatif pour véhicule automobile selon l'une quelconque des revendications précédentes, dans lequel le mécanisme d'entraînement (3) est unn moteur électrique.

7. Véhicule automobile comportant un ensemble de rideau d'air latéral actif rotatif selon l'une quelconque des revendications précédentes.
